# EUROPEAN PATENT APPLICATION

(11) **EP 4 311 238 A1**
(43) Date of publication of application: **24.01.2024**
(21) Application number: 22791796.0
(22) Date of filing: 21.04.2022
(51) Int. Cl.: H04N 19/46

(54) **IMAGE DECODING METHOD, IMAGE CODING METHOD, IMAGE DECODER, AND IMAGE ENCODER**

(30) Priority: 23.04.2021 US 202163178788 P; 23.04.2021 US 202163178751 P
(71) Applicant: Panasonic Intellectual Property Corporation of America, Torrance, CA 90504 (US)
(72) Inventor: TEO, Han Boon, Singapore 469332 (SG); LIM, Chong Soon, Singapore 469332 (SG); WANG, Chu Tong, Singapore 469332 (SG); ABE, Kiyofumi, Kadoma-shi, Osaka 571-0057 (JP)
(74) Representative: Grünecker Patent- und Rechtsanwälte PartG mbB
(86) International application number: PCT/JP2022/018475
(87) International publication number: WO 2022/225025

(57) **Abstract**

An image decoding device that: receives, from an image encoding device, a bitstream including encoded data of a plurality of feature maps for an image; decodes the plurality of feature maps using the bitstream; selects a first feature map from the plurality of decoded feature maps; outputs the first feature map to a first task processing device that executes a first task process based on the first feature map; selects a second feature map from the plurality of decoded feature maps; and outputs the second feature map to a second task processing device that executes a second task process based on the second feature map.

## Description

### Technical Field

The present disclosure relates to an image decoding method, an image encoding method, an image decoding device, and an image encoding device.

### Background Art

The neural network is a series of algorithms that attempt to recognize underlying relationships in a dataset via a process of imitating the processing method of the human brain. In this sense, the neural network refers to a system of neurons that is essentially organic or artificial. Different types of neural network in deep learning, for example, convolution neural network (CNN), recurrent neural network (RNN), and artificial neural network (ANN) will change the way we interact with the world. These different types of neural network will be the core of power applications such as the deep learning revolution, unmanned aerial vehicles, autonomous vehicles, and speech recognition. The CNN, which includes a plurality of stacked layers, is a class of deep neural network most commonly applied to the analysis of visual images.

A feature image is a unique representation indicating a feature of an image or an object included therein. For example, in a convolutional layer of a neural network, a feature image is obtained as output of applying a desired filter to the entire image. A plurality of feature images is obtained by applying a plurality of filters in a plurality of convolutional layers, and a feature map can be created by arranging the plurality of feature images.

The feature map is typically associated with a task processing device that executes a task process such as a neural network task. This setup usually enables the best inference result for a particular machine analysis task.

When the decoder side uses the feature map created by the encoder side, the encoder encodes the created feature map to transmit a bitstream including encoded data on the feature map to the decoder. The decoder decodes the feature map on the basis of the received bitstream. The decoder inputs the decoded feature map into a task processing device that executes the prescribed task process such as the neural network task.

According to the background art, when a plurality of task processing devices on the decoder side executes a plurality of neural network tasks by using a plurality of feature maps, it is necessary to install a plurality of sets of encoders and decoders corresponding to each of the plurality of task processing devices, complicating the system configuration.

Note that the image encoding system architecture according to the background art is disclosed, for example, in Patent Literatures 1 and 2.

### Citation List

### Patent Literature

Patent Literature 1: US Patent Publication No. 2010/0046635
Patent Literature 2: US Patent Publication No. 2021/0027470

### Summary of Invention

An object of the present disclosure is to simplify the system configuration.

An image decoding method according to one aspect of the present disclosure includes, by an image decoding device: receiving, from an image encoding device, a bitstream including encoded data of a plurality of feature maps for an image; decoding the plurality of feature maps using the bitstream; selecting a first feature map from the plurality of decoded feature maps and outputting the first feature map to a first task processing device that executes a first task process based on the first feature map; and selecting a second feature map from the plurality of decoded feature maps and outputting the second feature map to a second task processing device that executes a second task process based on the second feature map.

### Brief Description of Drawings

FIG. 1 is a flowchart showing a processing procedure of an image decoding method according to a first embodiment of the present disclosure.
FIG. 2 is a flowchart showing a processing procedure of an image encoding method according to the first embodiment of the present disclosure.
FIG. 3 is a diagram showing a configuration example of an image processing system according to the background art.
FIG. 4 is a diagram showing a configuration example of an image processing system according to the first embodiment of the present disclosure.
FIG. 5 is a diagram showing a first configuration example of an encoding device and a decoding device.
FIG. 6 is a diagram showing a second configuration example of the encoding device and the decoding device.
FIG. 7 is a block diagram showing a configuration of a video decoder according to the first embodiment of the present disclosure.
FIG. 8 is a block diagram showing a configuration of a video encoder according to the first embodiment of the present disclosure.
FIG. 9 is a diagram showing a first example of a feature map creation process.
FIG. 10 is a diagram showing the first example of the feature map creation process.
FIG. 11 is a diagram showing a first example of an operation of a selection unit.
FIG. 12 is a diagram showing a second example of the operation of the selection unit.
FIG. 13 is a diagram showing a second example of the feature map creation process.
FIG. 14 is a diagram showing the second example of the feature map creation process.
FIG. 15 is a diagram showing one example of a neural network task.
FIG. 16 is a diagram showing one example of the neural network task.
FIG. 17 is a diagram showing an example of using both inter prediction and intra prediction.
FIG. 18 is a flowchart showing a processing procedure of an image decoding method according to a second embodiment of the present disclosure.
FIG. 19 is a flowchart showing a processing procedure of an image encoding method according to the second embodiment of the present disclosure.
FIG. 20 is a diagram showing a configuration example of an image processing system according to the second embodiment of the present disclosure.
FIG. 21 is a block diagram showing a configuration of a decoding device according to the second embodiment of the present disclosure.
FIG. 22 is a block diagram showing a configuration of an encoding device according to the second embodiment of the present disclosure.
FIG. 23 is a diagram showing another example of the feature map.
FIG. 24 is a diagram showing the relationship between the feature image size and the encoding block size.
FIG. 25 is a diagram showing the relationship between the feature image size and the encoding block size.
FIG. 26 is a diagram showing a first example of scan order.
FIG. 27 is a diagram showing a second example of scan order.
FIG. 28 is a diagram showing an example of division into a plurality of segments.
FIG. 29 is a diagram showing an example of division into a plurality of segments.
FIG. 30 is a diagram showing an example of division into a plurality of segments.
FIG. 31 is a diagram showing the scan order when one feature image is divided into a plurality of encoding blocks and encoded.
FIG. 32 is a diagram showing the scan order when one feature image is divided into a plurality of encoding blocks and encoded.

### Description of Embodiments

### (Knowledge Underlying the Present Disclosure)

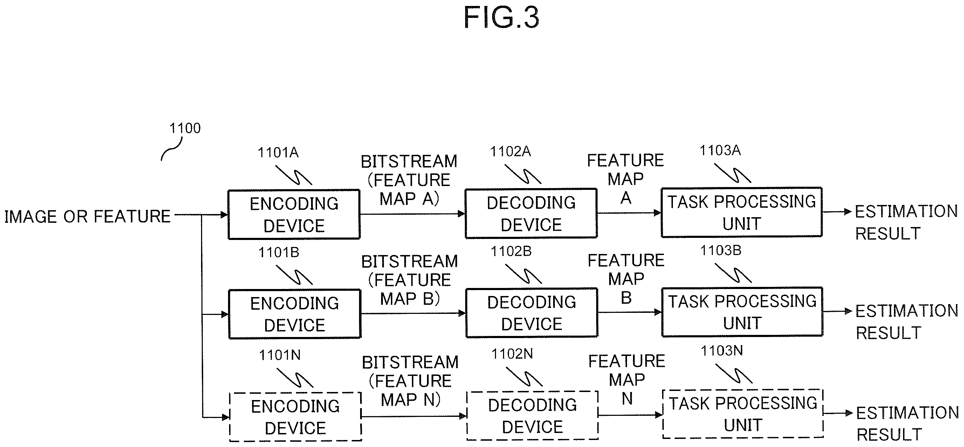

FIG. 3 is a diagram showing a configuration example of an image processing system 1100 according to the background art. The image processing system 1100 includes a plurality of task processing units 1103A to 1103N that executes the prescribed task process such as the neural network task on the decoder side. For example, the task processing unit 1103A executes a face landmark detection process, and the task processing unit 1103B executes a face direction detection process. The image processing system 1100 includes a set of encoding devices 1101A to 1101N and decoding devices 1102A to 1102N corresponding to the plurality of task processing units 1103A to 1103N, respectively.

For example, the encoding device 1101A creates a feature map A on the basis of the input image or feature, and encodes the created feature map A, thereby transmitting a bitstream including encoded data on the feature map A to the decoding device 1102A. The decoding device 1102A decodes the feature map A on the basis of the received bitstream, and inputs the decoded feature map A into the task processing unit 1103A. The task processing unit 1103A executes the prescribed task process by using the input feature map A, thereby outputting the estimation result.

The problem of the background art shown in FIG. 3 is that it is necessary to install a plurality of sets of encoding devices 1101A to 1101N and decoding devices 1102A to 1102N corresponding to the plurality of task processing units 1103A to 1103N, respectively, complicating the system configuration.

To solve such a problem, the present inventor introduces a new method in which an image encoding device transmits a plurality of feature maps included in the same bitstream to an image decoding device, and the image decoding device selects a desired feature map from the plurality of decoded feature maps and inputs the selected feature map into each of the plurality of task processing devices. This eliminates the need to install a plurality of sets of image encoding devices and image decoding devices corresponding to the plurality of task processing devices, respectively, and can simplify the system configuration because one set of image encoding device and image decoding device is sufficient.

Next, each aspect of the present disclosure will be described.

An image decoding method according to one aspect of the present disclosure includes, by an image decoding device: receiving, from an image encoding device, a bitstream including encoded data of a plurality of feature maps for an image; decoding the plurality of feature maps using the bitstream; selecting a first feature map from the plurality of decoded feature maps and outputting the first feature map to a first task processing device that executes a first task process based on the first feature map; and selecting a second feature map from the plurality of decoded feature maps and outputting the second feature map to a second task processing device that executes a second task process based on the second feature map.

According to the present aspect, the image decoding device selects the first feature map from the plurality of decoded feature maps and outputs the first feature map to the first task processing device, and selects the second feature map from the plurality of decoded feature maps and outputs the second feature map to the second task processing device. This eliminates the need to install a plurality of sets of image encoding devices and image decoding devices corresponding to each of the plurality of task processing devices, simplifying the system configuration.

In the above-described aspect, the image decoding device selects the first feature map and the second feature map based on index information of each of the plurality of feature maps.

According to the present aspect, using the index information allows the selection of the feature map to be executed appropriately.

In the above-described aspect, the image decoding device selects the first feature map and the second feature map based on size information of each of the plurality of feature maps.

According to the present aspect, using the size information allows the selection of the feature map to be executed simply.

In the above-described aspect, the image decoding device decodes the second feature map by inter prediction using the first feature map.

According to the present aspect, using inter prediction for decoding the feature map allows reduction in the encoding amount.

In the above-described aspect, the image decoding device decodes the first feature map and the second feature map by intra prediction.

According to the present aspect, using intra prediction for decoding the feature map allows the plurality of feature maps to be decoded independently of each other.

In the above-described aspect, each of the plurality of feature maps includes a plurality of feature images for the image.

According to the present aspect, since the task processing device can execute the task process by using the plurality of feature images included in each feature map, accuracy of the task process can be improved.

In the above-described aspect, the image decoding device constructs each of the plurality of feature maps by decoding the plurality of feature images and arranging the plurality of decoded feature images in a prescribed scan order.

According to the present aspect, the feature map can be appropriately constructed by arranging the plurality of feature images in the prescribed scan order.

In the above-described aspect, each of the plurality of feature maps includes a plurality of segments, each of the plurality of segments includes the plurality of feature images, the image decoding device constructs each of the plurality of segments by arranging the plurality of decoded feature images in the prescribed scan order, and constructs each of the plurality of feature maps by arranging the plurality of segments in a prescribed order.

According to the present aspect, it is possible to control the process of dividing the stream on a segment-by-segment basis or the decoding process on a segment-by-segment basis, and flexible system configurations can be implemented.

In the above-described aspect, the image decoding device switches, based on a size of each of the plurality of decoded feature images, between ascending order and descending order for the prescribed scan order.

According to the present aspect, switching between ascending order and descending order for the scan order based on the size of each feature image makes it possible to construct the feature map appropriately.

In the above-described aspect, the bitstream includes order information which sets one of ascending order or descending order for the prescribed scan order, and the image decoding device switches, based on the order information, between ascending order and descending order for the prescribed scan order.

According to the present aspect, switching between ascending order and descending order for the scan order based on the order information makes it possible to construct the feature map appropriately.

In the above-described aspect, the plurality of feature images includes a plurality of types of feature images of different sizes, and the image decoding device decodes the plurality of feature images with a constant decoding block size corresponding to the smallest size of the plurality of sizes of the plurality of types of feature images.

According to the present aspect, by decoding the plurality of feature images with a constant decoding block size, the device configuration of the image decoding device can be simplified.

In the above-described aspect, the plurality of feature images includes a plurality of types of feature images of different sizes, and the image decoding device decodes the plurality of feature images with a plurality of decoding block sizes corresponding to the plurality of sizes of the plurality of types of feature images.

According to the present aspect, by decoding each feature image with a decoding block size corresponding to the size of each feature image, the number of headers required for each decoding block can be reduced, and encoding in a large area is possible, improving compression efficiency.

In the above-described aspect, the prescribed scan order is raster scan order.

According to the present aspect, using the raster scan order enables fast processing by GPU or the like.

In the above-described aspect, the prescribed scan order is Z scan order.

According to the present aspect, using the Z scan order enables support for general video codecs.

In the above-described aspect, the bitstream includes encoded data on the image, the image decoding device decodes the image using the bitstream, and executes the decoding of the plurality of feature maps and the decoding of the image using a common decoding processing unit.

According to the present aspect, by executing the decoding of the feature maps and the decoding of the image by using a common decoding processing unit, the device configuration of the image decoding device can be simplified.

In the above-described aspect, the first task process and the second task process include at least one of object detection, object segmentation, object tracking, action recognition, pose estimation, pose tracking, and hybrid vision.

According to the present aspect, accuracy of each of these processes can be improved.

An image encoding method according to one aspect of the present disclosure includes, by an image encoding device: encoding a first feature map for an image; encoding a second feature map for the image; generating a bitstream including encoded data of the first feature map and the second feature map; and transmitting the generated bitstream to an image decoding device.

According to the present aspect, the image encoding device transmits the bitstream including the encoded data of the first feature map and the second feature map to the image decoding device. This eliminates the need to install a plurality of sets of image encoding devices and image decoding devices corresponding to each of the plurality of task processing devices installed on the image decoding device side, simplifying the system configuration.

An image decoding device according to one aspect of the present disclosure is configured to: receive, from an image encoding device, a bitstream including encoded data of a plurality of feature maps for an image; decode the plurality of feature maps using the bitstream; select a first feature map from the plurality of decoded feature maps and output the first feature map to a first task processing device that executes a first task process based on the first feature map; and select a second feature map from the plurality of decoded feature maps and output the second feature map to a second task processing device that executes a second task process based on the second feature map.

According to the present aspect, the image decoding device selects the first feature map from the plurality of decoded feature maps and outputs the first feature map to the first task processing device, and selects the second feature map from the plurality of decoded feature maps and outputs the second feature map to the second task processing device. This eliminates the need to install a plurality of sets of image encoding devices and image decoding devices corresponding to each of the plurality of task processing devices, simplifying the system configuration.

An image encoding device according to one aspect of the present disclosure is configured to: encode a first feature map for an image; encode a second feature map for the image; generate a bitstream including encoded data of the first feature map and the second feature map; and transmit the generated bitstream to an image decoding device.

According to the present aspect, the image encoding device transmits the bitstream including the encoded data of the first feature map and the second feature map to the image decoding device. This eliminates the need to install a plurality of sets of image encoding devices and image decoding devices corresponding to each of the plurality of task processing devices installed on the image decoding device side, simplifying the system configuration.

### (Embodiments of Present Disclosure)

Embodiments of the present disclosure will be described in detail below with reference to the drawings. Note that elements denoted by the same reference numerals in different drawings represent the same or corresponding elements.

Note that each of the embodiments described below shows one specific example of the present disclosure. Numerical values, shapes, components, steps, order of steps, and the like shown in the following embodiments are merely one example, and are not intended to limit the present disclosure. A component that is not described in an independent claim representing the highest concept among components in the embodiments below is described as an arbitrary component. In all the embodiments, respective contents can be combined.

### (First Embodiment)

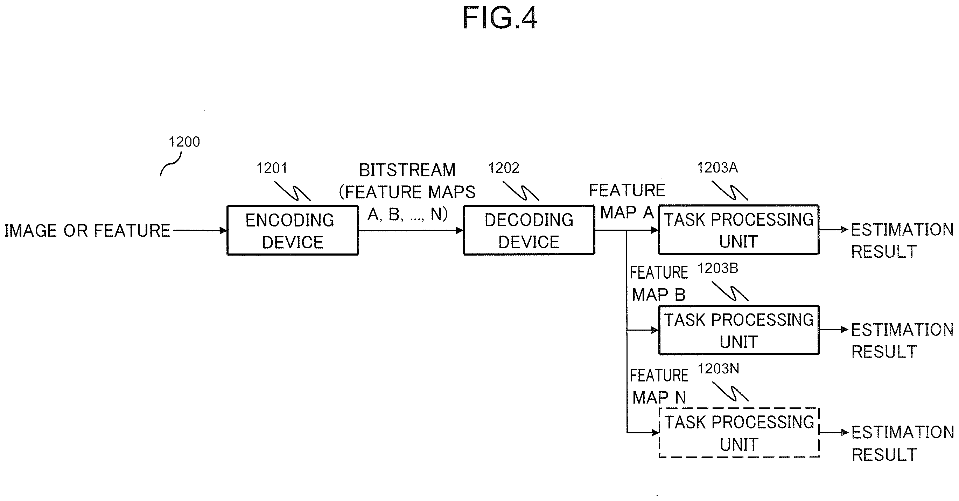

FIG. 4 is a diagram showing a configuration example of an image processing system 1200 according to the first embodiment of the present disclosure. The image processing system 1200 includes an encoding device 1201 as an image encoding device, a decoding device 1202 as an image decoding device, and a plurality of task processing units 1203A to 1203N as task processing devices.

The encoding device 1201 creates a plurality of feature maps A to N on the basis of an input image or features. The encoding device 1201 encodes the created feature maps A to N to generate a bitstream including encoded data on the feature maps A to N. The encoding device 1201 transmits the generated bitstream to the decoding device 1202. The decoding device 1202 decodes the feature maps A to N on the basis of the received bitstream. The decoding device 1202 selects the feature map A as a first feature map from among the decoded feature maps A to N, and inputs the selected feature map A into the task processing unit 1203A as the first task processing device. The decoding device 1202 selects the feature map B as the second feature map from among the decoded feature maps A to N, and inputs the selected feature map B into the task processing unit 1203B as the second task processing device. The task processing unit 1203A executes a first task process such as the neural network task on the basis of the input feature map A, and outputs the estimation result. The task processing unit 1203B executes a second task process such as the neural network task on the basis of the input feature map B, and outputs the estimation result.

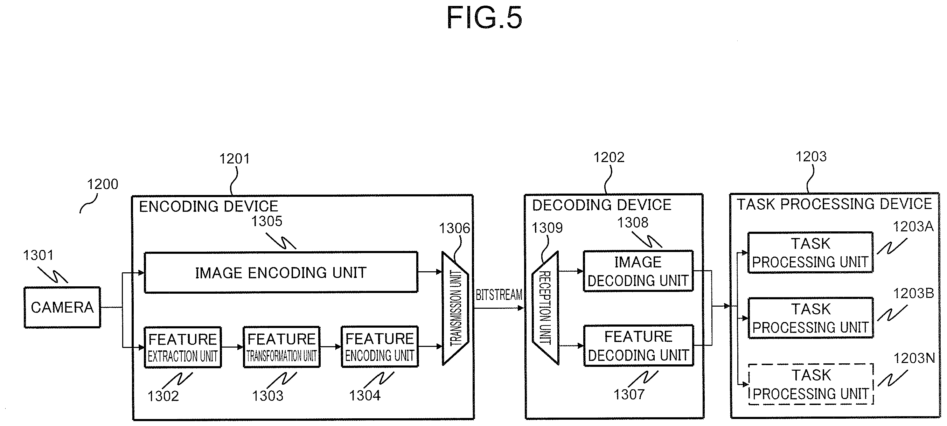

FIG. 5 is a diagram showing a first configuration example of the encoding device 1201 and the decoding device 1202. The encoding device 1201 includes an image encoding unit 1305, a feature extraction unit 1302, a feature transformation unit 1303, a feature encoding unit 1304, and a transmission unit 1306. The decoding device 1202 includes a reception unit 1309, an image decoding unit 1308, and a feature decoding unit 1307.

Image data from a camera 1301 is input into the image encoding unit 1305 and the feature extraction unit 1302. The image encoding unit 1305 encodes the input image and inputs the encoded data into the transmission unit 1306. Note that the image encoding unit 1305 may use a general video codec or still image codec as it is. The feature extraction unit 1302 extracts a plurality of feature images representing the features of the image from the input image, and inputs the plurality of extracted feature images into the feature transformation unit 1303. The feature transformation unit 1303 generates a feature map by arranging the plurality of feature images. The feature transformation unit 1303 generates a plurality of feature maps for one input image, and inputs the plurality of generated feature maps into the feature encoding unit 1304. The feature encoding unit 1304 encodes the plurality of input feature maps and inputs the encoded data into the transmission unit 1306. The transmission unit 1306 generates a bitstream including the encoded data on the input image and the encoded data on the plurality of feature maps, and transmits the generated bitstream to the decoding device 1202.

The reception unit 1309 receives the bitstream transmitted from the encoding device 1201, and inputs the received bitstream into the image decoding unit 1308 and the feature decoding unit 1307. The image decoding unit 1308 decodes the image on the basis of the input bitstream. The feature decoding unit 1307 decodes the plurality of feature maps on the basis of the input bitstream.

Note that the example shown in FIG. 5 has a configuration in which both the image and the feature maps are encoded and decoded. However, if image display for human vision is not necessary, a configuration in which only the feature maps are encoded and decoded may be adopted. In that case, a configuration in which the image encoding unit 1305 and the image decoding unit 1308 are omitted may be adopted.

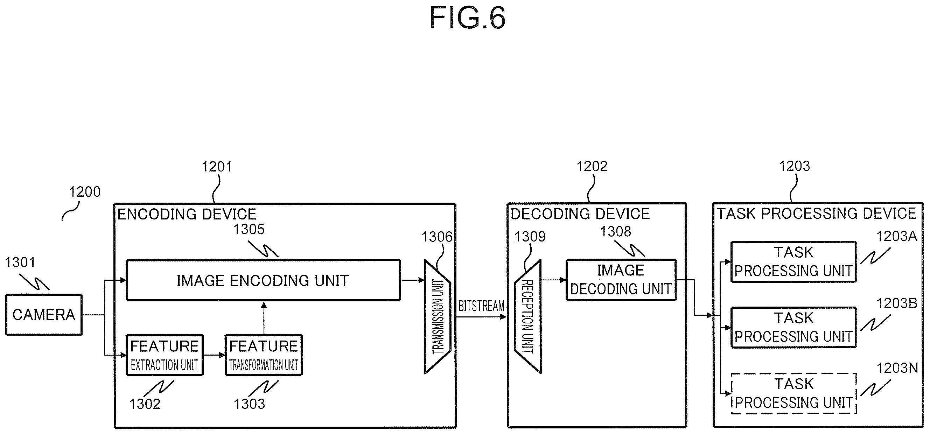

FIG. 6 is a diagram showing a second configuration example of the encoding device 1201 and the decoding device 1202. Regarding the encoding device 1201, the feature encoding unit 1304 is omitted from the configuration shown in FIG. 5. Regarding the decoding device 1202, the feature decoding unit 1307 is omitted from the configuration shown in FIG. 5.

The feature transformation unit 1303 generates a plurality of feature maps for one input image, and inputs the plurality of generated feature maps into the image encoding unit 1305. The image encoding unit 1305 encodes the input image and the plurality of feature maps, and inputs the encoded data on the input image and the plurality of feature maps into the transmission unit 1306. The transmission unit 1306 generates a bitstream including the encoded data on the input image and the plurality of feature maps, and transmits the generated bitstream to the decoding device 1202.

The reception unit 1309 receives the bitstream transmitted from the encoding device 1201, and inputs the received bitstream into the image decoding unit 1308. The image decoding unit 1308 decodes the image and the plurality of feature maps on the basis of the input bitstream. That is, in the configuration shown in FIG. 6, the decoding device 1202 executes image decoding and decoding of the plurality of feature maps by using the image decoding unit 1308 as a common decoding processing unit.

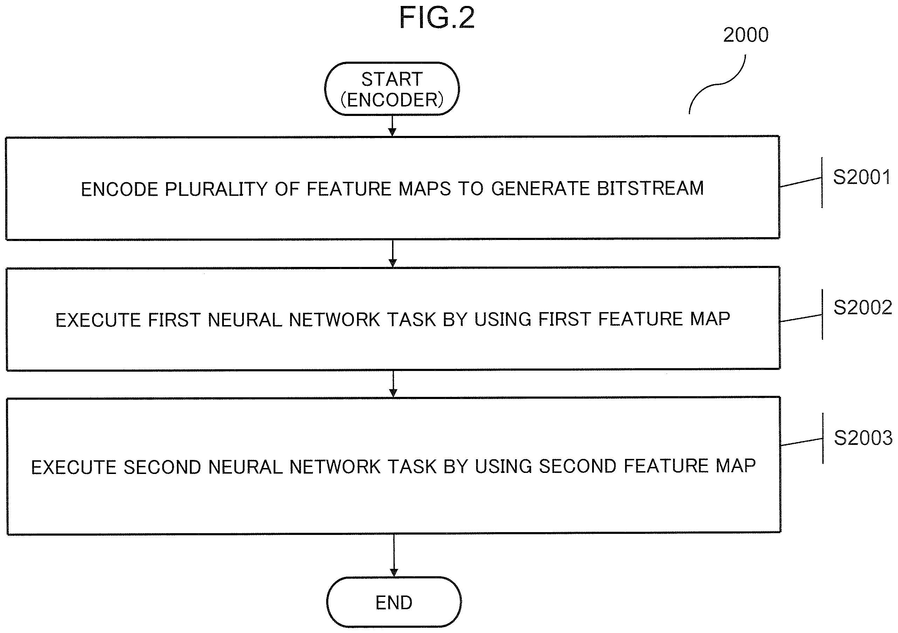

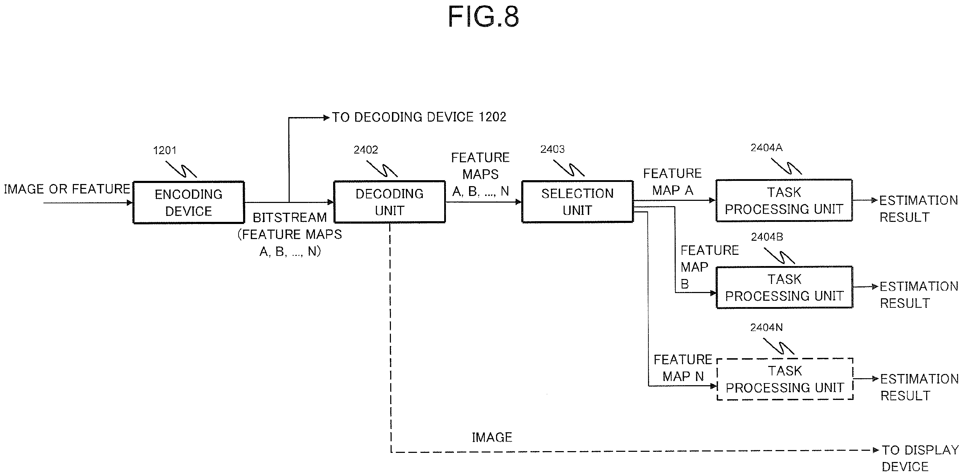

FIG. 8 is a block diagram showing a configuration of a video encoder according to the first embodiment of the present disclosure. FIG. 2 is a flowchart showing a processing procedure 2000 of an image encoding method according to the first embodiment of the present disclosure.

As shown in FIG. 8, the video encoder includes the encoding device 1201, a decoding unit 2402, a selection unit 2403, and a plurality of task processing units 2404A to 2404N. The selection unit 2403 may be installed inside the decoding unit 2402. The video encoder is configured to create the plurality of feature maps A to N on the basis of the input image or features, generate the bitstream by encoding the plurality of created feature maps A to N, and transmit the generated bitstream to the decoding device 1202. Furthermore, the video encoder may be configured to decode the plurality of feature maps A to N on the basis of the generated bitstream, input the plurality of decoded feature maps A to N into the task processing units 2404A to 2404N, and output the estimation result by the task processing units 2404A to 2404N executing the neural network task.

In step S2001 of FIG. 2, an image or features are input into the encoding device 1201. The encoding device 1201 creates the plurality of feature maps A to N on the basis of the input image or features. The encoding device 1201 encodes the created feature maps A to N block by block to generate the bitstream including encoded data on the feature maps A to N. The encoding device 1201 transmits the generated bitstream to the decoding device 1202.

More specifically, the encoding device 1201 encodes the plurality of feature maps about the input image. Each feature map indicates a unique attribute about the image, and each feature map is, for example, arithmetically encoded. Arithmetic encoding is, for example, context adaptive binary arithmetic coding (CABAC).

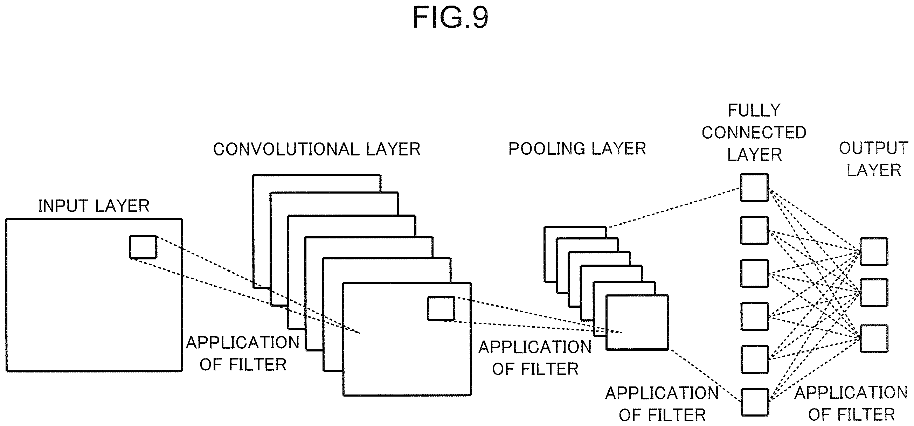

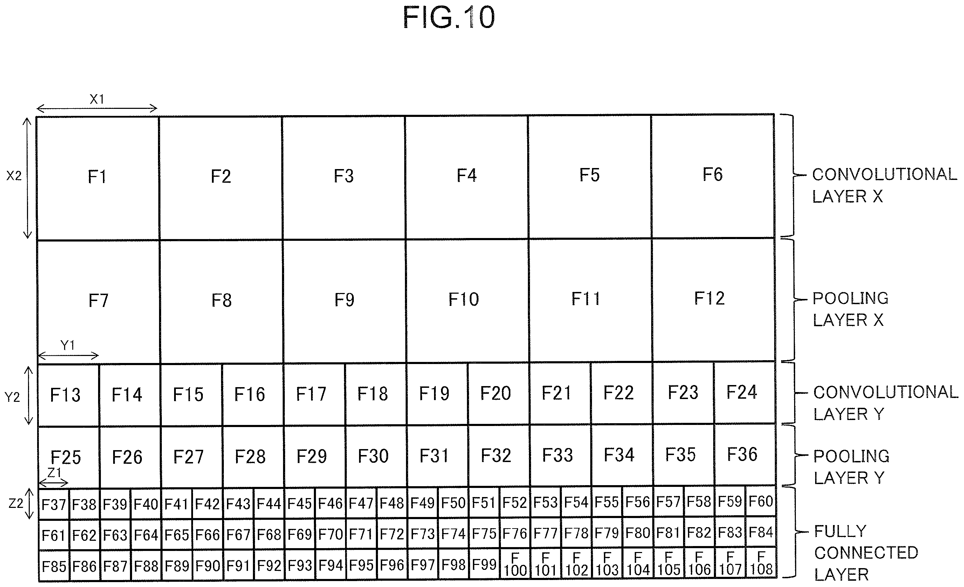

FIGS. 9 and 10 are diagrams showing a first example of the feature map creation process. The feature map is created using a convolutional neural network having a plurality of convolutional layers, a plurality of pooling layers, and the fully connected layer. The feature map includes a plurality of feature images F1 to F 108 about the input image. The resolution of each feature image and the number of feature images may differ for each layer of the neural network. For example, the horizontal size X1 and the vertical size X2 of the feature images F1 to F12 in the upper convolutional layer X and the pooling layer X are larger than the horizontal size Y1 and the vertical size Y2 of the feature images F13 to F36 in the lower convolutional layer Y and the pooling layer Y. The horizontal size Y1 and the vertical size Y2 are larger than the horizontal size Z1 and the vertical size Z2 of the feature images F37 to F108 in the fully connected layer.

For example, the plurality of feature images F1 to F108 is arranged according to the hierarchical order of the neural network. That is, the arrangement is made in ascending order (order of size from largest) or descending order (order of size from smallest) of the hierarchy of the neural network.

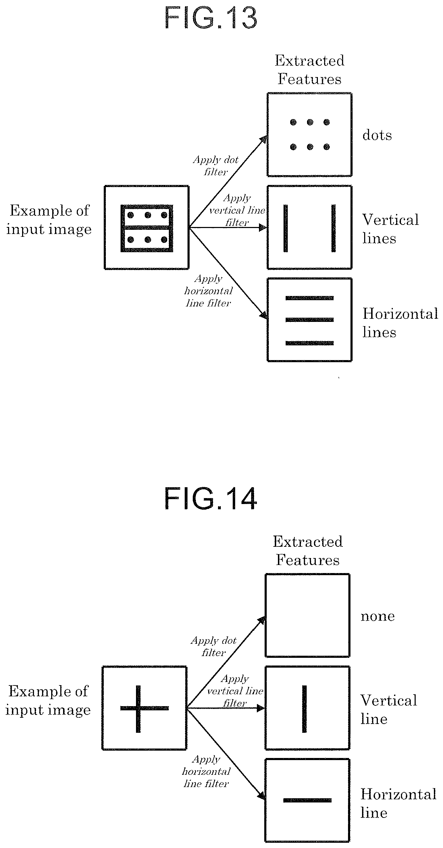

FIGS. 13 and 14 are diagrams showing a second example of the feature map creation process, showing an example of the filter process for extracting features from the input image.

The extracted feature represents a measurable and characteristic attribute about the input image. As shown in FIGS. 13 and 14, by applying a dot filter, vertical line filter, or horizontal line filter of the desired filter size to the input image, it is possible to generate a feature image with dot components extracted, a feature image with vertical line components extracted, or a feature image with horizontal line components extracted. By arranging the plurality of generated feature images, it is possible to generate a feature map on the basis of the filter process.

With reference to FIG. 8, the bitstream including encoded data on the plurality of feature maps A to N is input into the decoding unit 2402. The decoding unit 2402 decodes the image from the input bitstream as necessary, and outputs an image signal for human vision to a display device. The decoding unit 2402 decodes the plurality of feature maps A to N from the input bitstream and inputs the decoded feature maps A to N into the selection unit 2403. The plurality of feature maps A to N of the same time instance can be decoded independently. One example of independent decoding is using intra prediction. The plurality of feature maps A to N of the same time instance can be decoded in correlation. One example of correlation decoding is using inter prediction, and the second feature map can be decoded by inter prediction using the first feature map. The selection unit 2403 selects a desired feature map from among the plurality of decoded feature maps A to N, and inputs the selected feature map into each of the task processing units 2404A to 2404N.

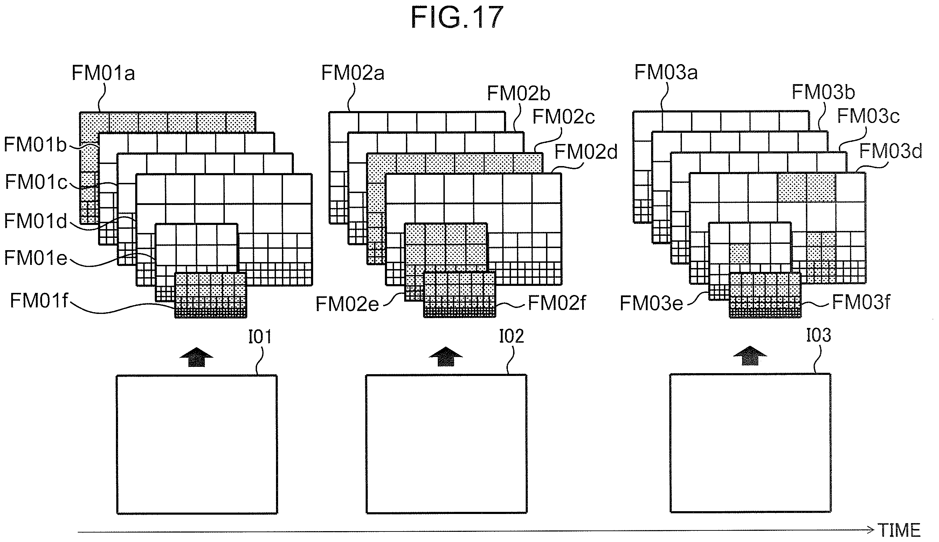

FIG. 17 is a diagram showing an example of using both inter prediction and intra prediction. A plurality of feature maps FM01 a to FM01f is generated on the basis of the input image I01, a plurality of feature maps FM02a to FM02f is generated on the basis of the input image 102, and a plurality of feature maps FM03a to FM03f is generated on the basis of the input image 103. The hatched feature map or feature image in FIG. 17 is encoded by intra prediction, whereas the non-hatched feature map or feature image is encoded by inter prediction. Inter prediction may use other feature maps or feature images corresponding to input images at the same time (same time instance), or may use other feature maps or feature images corresponding to input images at different times (different time instances).

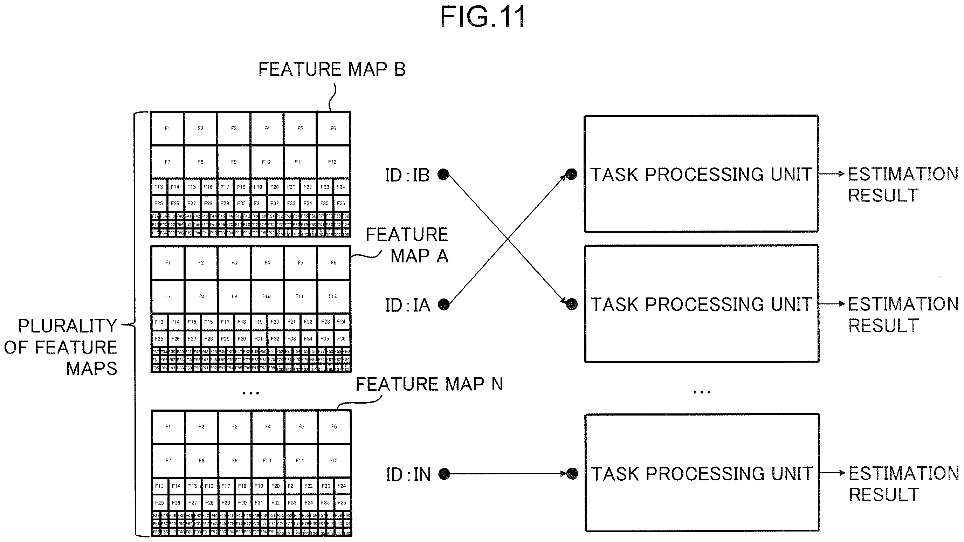

FIG. 11 is a diagram showing a first example of an operation of the selection unit 2403. The selection unit 2403 selects the feature maps A to N on the basis of index information IA to IN added to respective feature maps A to N. The index information IA to IN may be an ID, a category, a formula, or arbitrary unique representation that distinguishes each of the plurality of feature maps A to N. The selection unit 2403 holds table information indicating the correspondence between the index information IA to IN and the task processing units 2404A to 2404N, and selects the feature maps A to N to be input into the task processing units 2404A to 2404N on the basis of the index information IA to IN added to the bitstream header or the like that constitutes respective feature maps A to N, and the table information. Note that the table information may also be described in the bitstream header or the like.

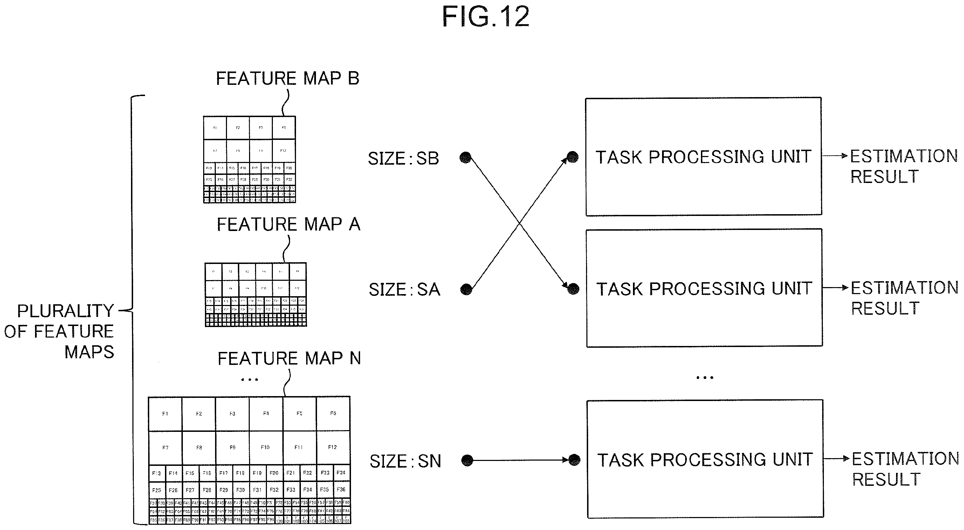

FIG. 12 is a diagram showing a second example of the operation of the selection unit 2403. The selection unit 2403 selects the feature maps A to N on the basis of size information SA to SN such as the resolution of each of the feature maps A to N or the number of feature images. The resolution is the number of pixels in the feature map, such as 112×112, 56×56, or 14×14. The number of feature images is the number of plurality of feature images included in each feature map. The sizes of the feature maps that can be input into respective task processing units 2404A to 2404N are different from each other, and the selection unit 2403 holds the setting information. The selection unit 2403 selects the feature maps A to N to be input into respective task processing units 2404A to 2404N on the basis of the size information SA to SN added to the bitstream header or the like that constitutes each of the feature maps A to N and the setting information. Note that the setting information may also be described in the bitstream header or the like.

Note that the selection unit 2403 may select the feature maps A to N on the basis of a combination of the index information IA to IN and the size information SA to SN.

In step S2002 of FIG. 2, the task processing unit 2404A executes at least the first task process such as the neural network task involving estimation on the basis of the input feature map A. One example of the neural network task is object detection, object segmentation, object tracking, action recognition, pose estimation, pose tracking, machine-human hybrid vision, or an arbitrary combination thereof.

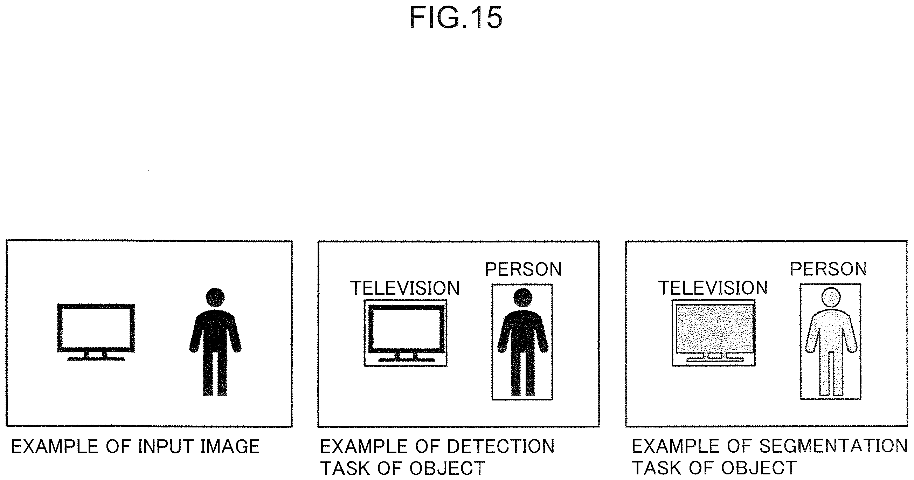

FIG. 15 is a diagram showing object detection and object segmentation as one example of the neural network task. In object detection, the attribute of the object (television and person in this example) included in the input image is detected. In addition to the attribute of the object included in the input image, the position and the number of objects in the input image may be detected. By the object detection, for example, the position of the object to be recognized may be narrowed down, or objects other than the object to be recognized may be excluded. As a specific use, for example, detection of a face in a camera and detection of a pedestrian in autonomous driving can be considered. In object segmentation, pixels in the region corresponding to the object are segmented (or partitioned). By the object segmentation, for example, uses such as separating obstacles and roads in autonomous driving to provide assistance to safe traveling of a car, detecting product defects in a factory, and identifying terrain in a satellite image can be considered.

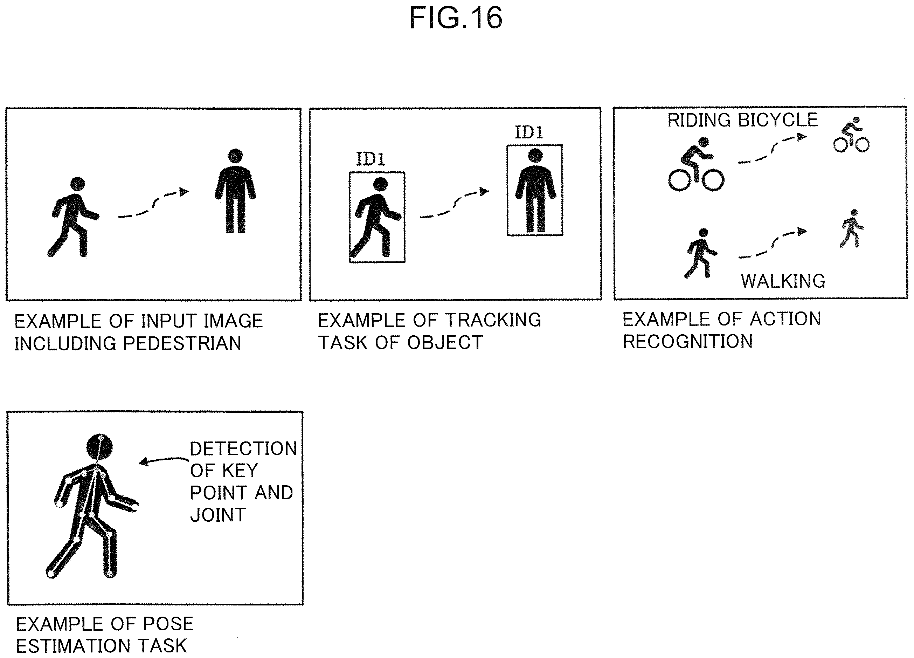

FIG. 16 is a diagram showing object tracking, action recognition, and pose estimation as one example of the neural network task. In object tracking, movement of the object included in the input image is tracked. As a use, for example, counting the number of users in a shop or other facilities and analyzing motion of an athlete can be considered. Faster processing will enable real-time object tracking and application to camera processing such as autofocus. In action recognition, the type of action of the object (in this example, "riding a bicycle" and "walking") is detected. For example, by the use for a security camera, application to prevention and detection of criminal behavior such as robbery and shoplifting, and to prevention of forgetting work in a factory is possible. In pose estimation, the posture of the object is detected by key point and joint detection. For example, usage in an industrial field such as improving work efficiency in a factory, a security field such as detection of abnormal behavior, and healthcare and sports fields can be considered.

The task processing unit 2404A outputs a signal indicating execution results of the neural network task. The signal may include at least one of the number of detected objects, the trust level of the detected objects, boundary information or location information on the detected objects, and the classification category of the detected objects.

In step S2003 of FIG. 2, the task processing unit 2404B executes at least the second task process such as the neural network task involving estimation on the basis of the input feature map B. In a similar manner to the first task process, one example of the neural network task is object detection, object segmentation, object tracking, action recognition, pose estimation, pose tracking, machine-human hybrid vision, or an arbitrary combination thereof. The task processing unit 2404B outputs a signal indicating execution results of the neural network task.

Note that the configuration shown in FIG. 8 includes the decoding unit 2402, the selection unit 2403, and the plurality of task processing units 2404A to 2404N, thereby making it possible to output estimation results by executing the neural network task. However, if there is no need to execute the neural network task in the video decoder, a configuration in which the decoding unit 2402, the selection unit 2403, and the plurality of task processing units 2404A to 2404N are omitted may be adopted. Similarly, in the processing procedure 2000 shown in FIG. 2, if there is no need to execute the neural network task, a configuration in which steps S2002 and S2003 are omitted may be adopted.

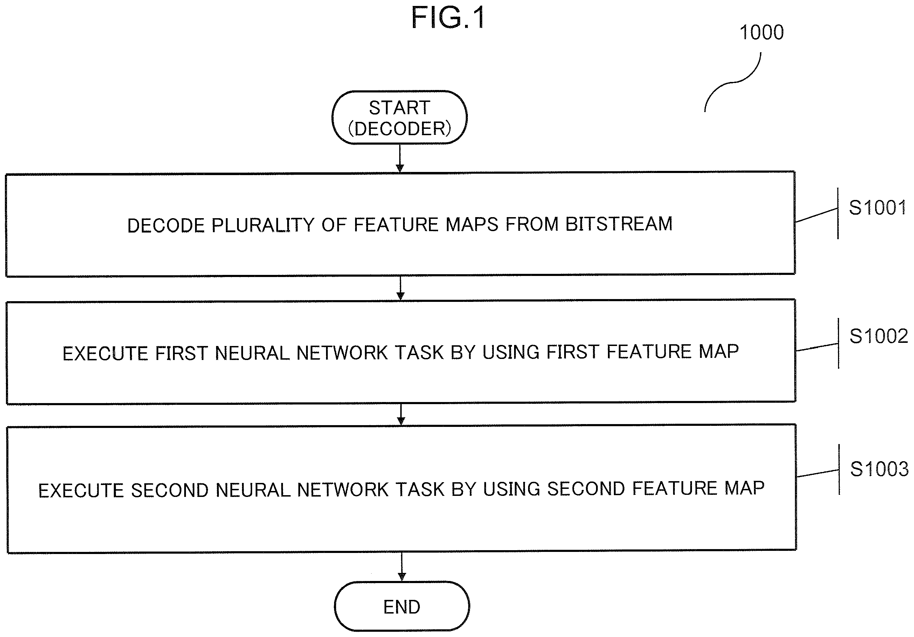

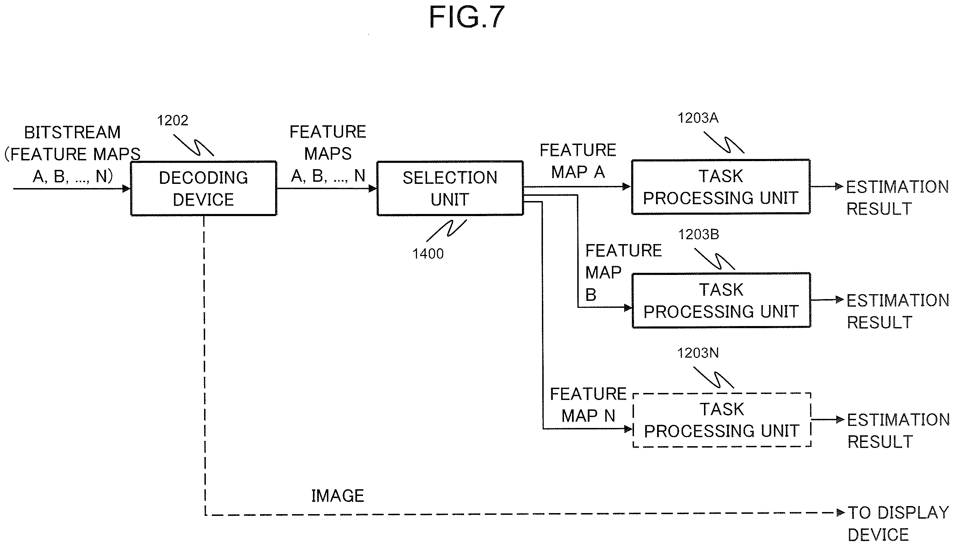

FIG. 7 is a block diagram showing a configuration of the video decoder according to the first embodiment of the present disclosure. FIG. 1 is a flowchart showing a processing procedure 1000 of the image decoding method according to the first embodiment of the present disclosure.

As shown in FIG. 7, the video decoder includes the decoding device 1202, a selection unit 1400, and the plurality of task processing units 1203A to 1203N. The selection unit 1400 may be installed inside the decoding device 1202. The video decoder is configured to decode the plurality of feature maps A to N on the basis of the received bitstream, input the plurality of decoded feature maps A to N into the task processing units 1203A to 1203N, and output the estimation result by the task processing units 1203A to 1203N executing the neural network task.

The bitstream including encoded data on the plurality of feature maps A to N is input into the decoding device 1202. The decoding device 1202 decodes the image from the input bitstream as necessary, and outputs an image signal for human vision to a display device. The decoding device 1202 decodes the plurality of feature maps A to N from the input bitstream and inputs the decoded feature maps A to N into the selection unit 1400. The plurality of feature maps A to N of the same time instance can be decoded independently. One example of independent decoding is using intra prediction. The plurality of feature maps A to N of the same time instance can be decoded in correlation. One example of correlation decoding is using inter prediction, and the second feature map can be decoded by inter prediction using the first feature map. The selection unit 1400 selects a desired feature map from among the plurality of decoded feature maps A to N, and inputs the selected feature map into each of the task processing units 1203A to 1203N.

FIG. 17 is a diagram showing an example of using both inter prediction and intra prediction. A plurality of feature maps FM01a to FM01f is generated on the basis of the input image I01, a plurality of feature maps FM02a to FM02f is generated on the basis of the input image 102, and a plurality of feature maps FM03a to FM03f is generated on the basis of the input image 103. The hatched feature map or feature image in FIG. 17 is encoded by intra prediction, whereas the non-hatched feature map or feature image is encoded by inter prediction. Inter prediction may use other feature maps or feature images corresponding to input images at the same time (same time instance), or may use other feature maps or feature images corresponding to input images at different times (different time instances).

FIG. 11 is a diagram showing a first example of the operation of the selection unit 1400. The selection unit 1400 selects the feature maps A to N on the basis of the index information IA to IN added to respective feature maps A to N. The index information IA to IN may be an ID, a category, a formula, or arbitrary unique representation that distinguishes each of the plurality of feature maps A to N. The selection unit 1400 holds table information indicating the correspondence between the index information IA to IN and the task processing units 1203A to 1203N, and selects the feature maps A to N to be input into respective task processing units 1203A to 1203N on the basis of the index information IA to IN added to the bitstream header or the like that constitutes respective feature maps A to N, and the table information. Note that the table information may also be described in the bitstream header or the like.

FIG. 12 is a diagram showing a second example of the operation of the selection unit 1400. The selection unit 1400 selects the feature maps A to N on the basis of the size information SA to SN such as the resolution of each of the feature maps A to N or the number of feature images. The resolution is the number of pixels in the feature map, such as 112×112, 56×56, or 14×14. The number of feature images is the number of plurality of feature images included in each feature map. The sizes of the feature maps that can be input into respective task processing units 1203A to 1203N are different from each other, and the selection unit 1400 holds the setting information. The selection unit 1400 selects the feature maps A to N to be input into respective task processing units 1203A to 1203N on the basis of the size information SA to SN added to the bitstream header or the like that constitutes each of the feature maps A to N and the setting information. Note that the setting information may also be described in the bitstream header or the like.

Note that the selection unit 1400 may select the feature maps A to N on the basis of a combination of the index information IA to IN and the size information SA to SN.

In step S1002 of FIG. 1, the task processing unit 1203A executes at least the first task process such as the neural network task involving estimation on the basis of the input feature map A. One example of the neural network task is object detection, object segmentation, object tracking, action recognition, pose estimation, pose tracking, machine-human hybrid vision, or an arbitrary combination thereof. One example of the neural network task is similar to FIGS. 15 and 16.

The task processing unit 1203A outputs a signal indicating execution results of the neural network task. The signal may include at least one of the number of detected objects, the trust level of the detected objects, boundary information or location information on the detected objects, and the classification category of the detected objects.

In step S1003 of FIG. 1, the task processing unit 1203B executes at least the second task process such as the neural network task involving estimation on the basis of the input feature map B. In a similar manner to the first task process, one example of the neural network task is object detection, object segmentation, object tracking, action recognition, pose estimation, pose tracking, machine-human hybrid vision, or an arbitrary combination thereof. The task processing unit 1203B outputs a signal indicating execution results of the neural network task.

According to the present embodiment, the encoding device 1201 transmits the bitstream including encoded data on the first feature map A and the second feature map B to the decoding device 1202. The decoding device 1202 selects the first feature map A from the plurality of decoded feature maps A to N and outputs the first feature map A to the first task processing unit 1203A, and selects the second feature map B from the plurality of decoded feature maps A to N and outputs the second feature map B to the second task processing unit 1203B. This eliminates the need to install a plurality of sets of encoding devices and decoding devices corresponding to each of the plurality of task processing units 1203A to 1203N, simplifying the system configuration.

### (Second Embodiment)

Since video codecs generally have limited memory capacity, images are often encoded in Z scan order. However, when constructing a system using a GPU with a large memory capacity, faster processing is possible if images or features input by using raster scan order rather than Z scan order are sequentially loaded into a memory of the GPU. Therefore, in the present embodiment, in the process of constructing a feature map by arranging a plurality of feature images in the prescribed scan order, a system that can switch between general Z scan order and fast raster scan order will be described. The present embodiment is applicable to an image processing system including at least one task processing unit.

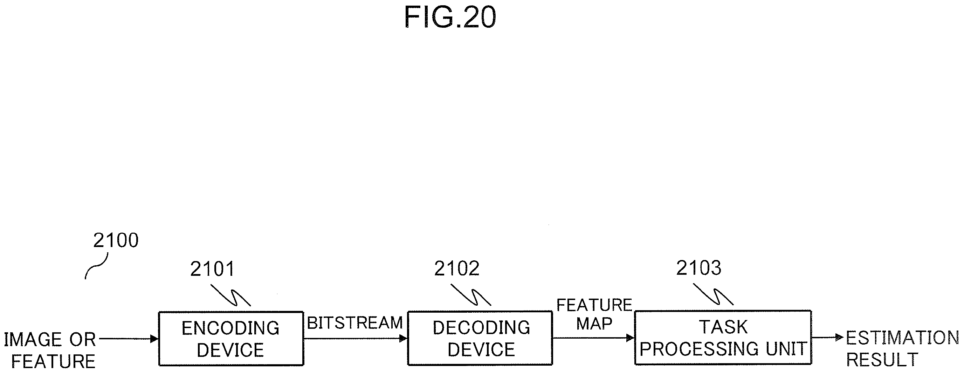

FIG. 20 is a diagram showing a configuration example of an image processing system 2100 according to the second embodiment of the present disclosure. The image processing system 2100 includes an encoding device 2101 as an image encoding device, a decoding device 2102 as an image decoding device, and a task processing unit 2103 as a task processing device. A plurality of the task processing units 2103 may be provided as in the first embodiment.

The encoding device 2101 creates a feature map on the basis of an input image or features. The encoding device 2101 encodes the created feature map to generate a bitstream including encoded data on the feature map. The encoding device 2101 transmits the generated bitstream to the decoding device 2102. The decoding device 2102 decodes the feature map on the basis of the received bitstream. The decoding device 2102 inputs the decoded feature map into the task processing unit 2103. The task processing unit 2103 executes the prescribed task process such as the neural network task on the basis of the input feature map, and outputs the estimation result.

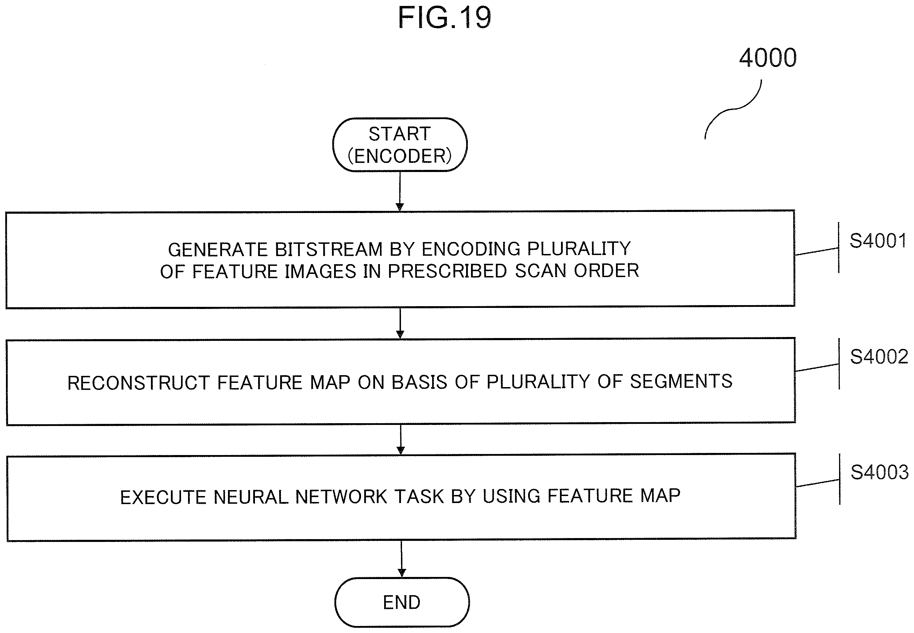

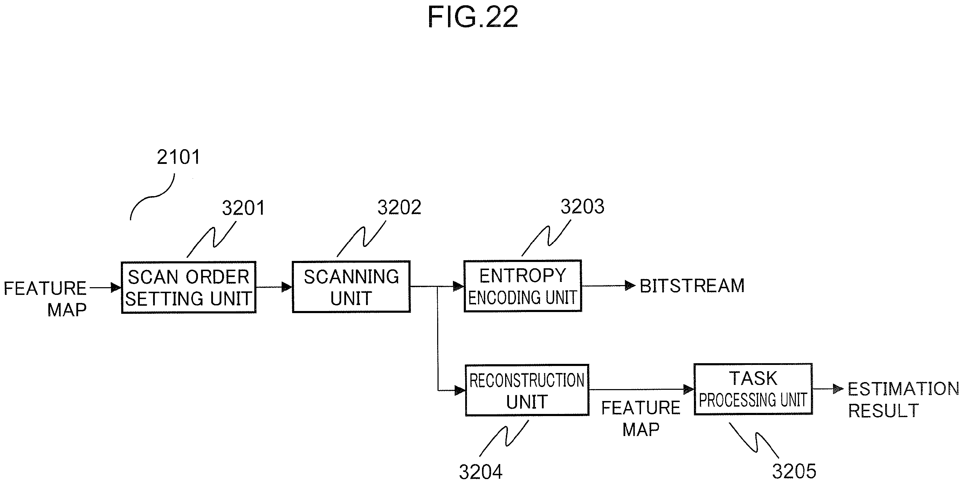

FIG. 22 is a block diagram showing a configuration of the encoding device 2101 according to the second embodiment of the present disclosure. FIG. 19 is a flowchart showing a processing procedure 4000 of an image encoding method according to the second embodiment of the present disclosure.

As shown in FIG. 22, the encoding device 2101 includes a scan order setting unit 3201, a scanning unit 3202, and an entropy encoding unit 3203. The encoding device 2101 may include a reconstruction unit 3204 and a task processing unit 3205.

The feature map is input into the scan order setting unit 3201. As shown in FIG. 10, the feature map is constructed by arranging a plurality of feature images F1 to F108 in the prescribed scan order.

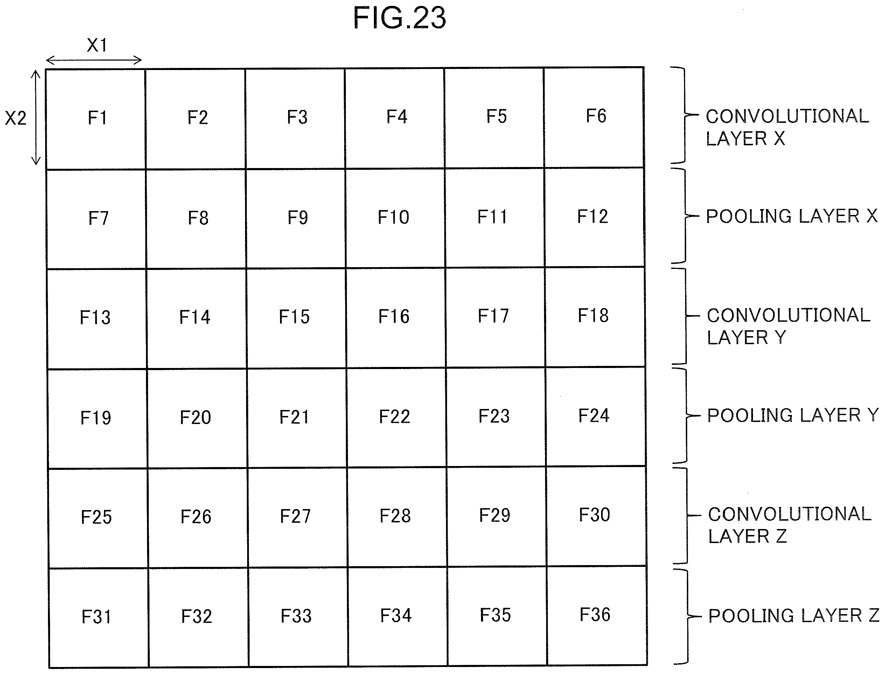

FIG. 23 is a diagram showing another example of the feature map. The feature map includes a plurality of feature images F1 to F36 about the input image. The resolution of each feature image and the number of feature images may be identical for all layers of the neural network. All the feature images F1 to F36 have the same horizontal size X1 and vertical size X2.

In step S4001 of FIG. 19, the scan order setting unit 3201 sets scan order for dividing the feature map into a plurality of feature images according to the rule determined in advance between the encoding device 2101 and the decoding device 2102. Note that the scan order setting unit 3201 may arbitrarily set the scan order for dividing the feature map into a plurality of feature images, and add setting information indicating the scan order to the bitstream header and transmit the bitstream to the decoding device 2102. In this case, the decoding device 2102 can construct the feature map by arranging the plurality of decoded feature images in the scan order indicated by the setting information.

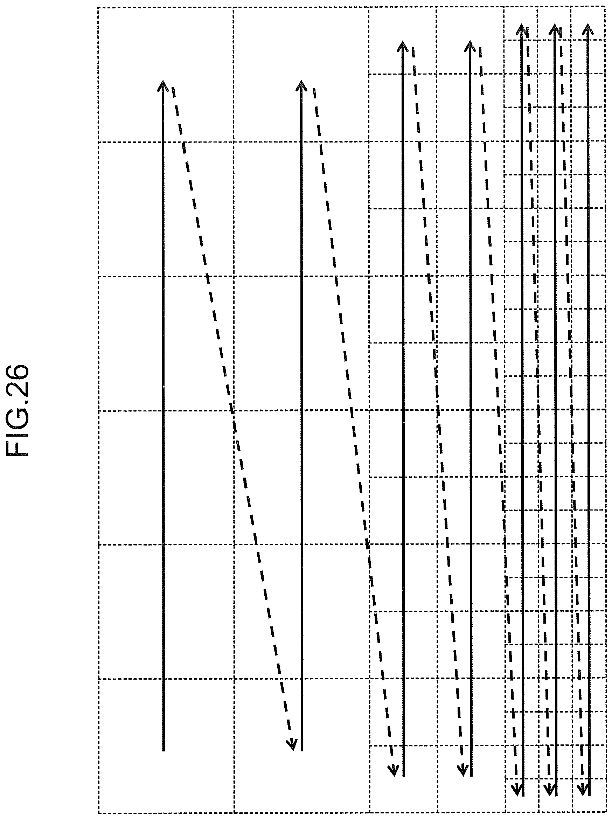

FIG. 26 is a diagram showing a first example of the scan order. The scan order setting unit 3201 sets the raster scan order as the scan order.

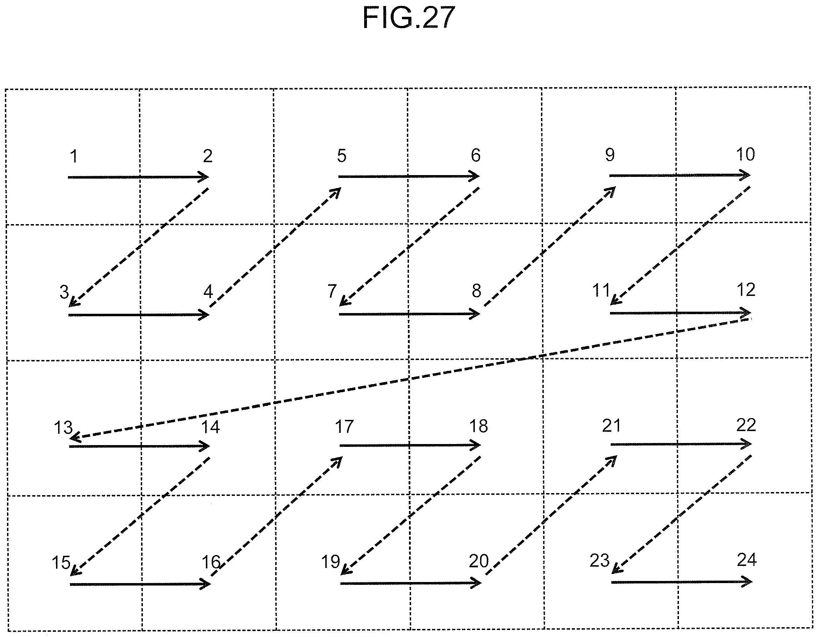

FIG. 27 is a diagram showing a second example of the scan order. The scan order setting unit 3201 sets the Z scan order as the scan order.

The scanning unit 3202 divides the feature map into a plurality of segments in the scan order set by the scan order setting unit 3201, and divides each segment into a plurality of feature images.

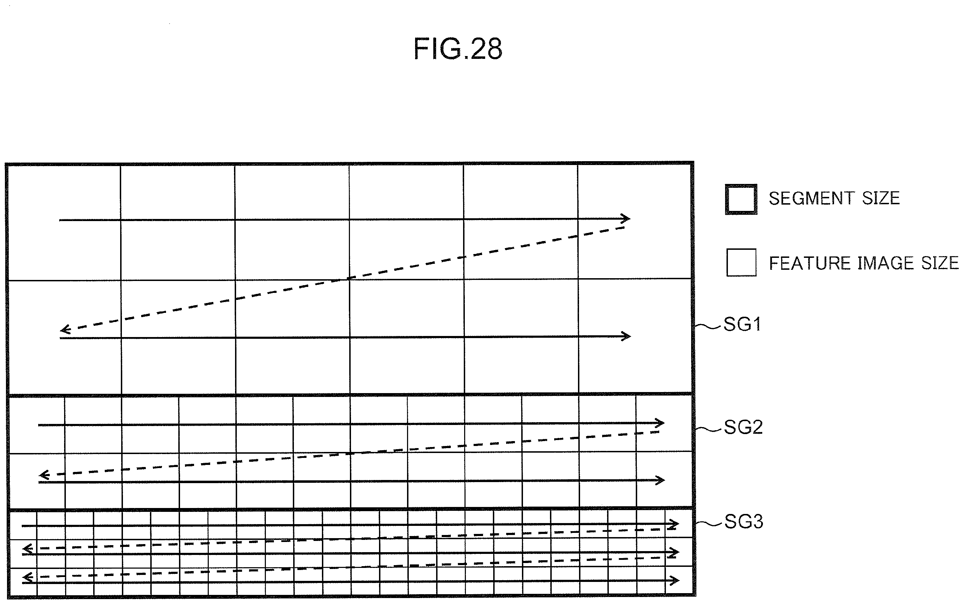

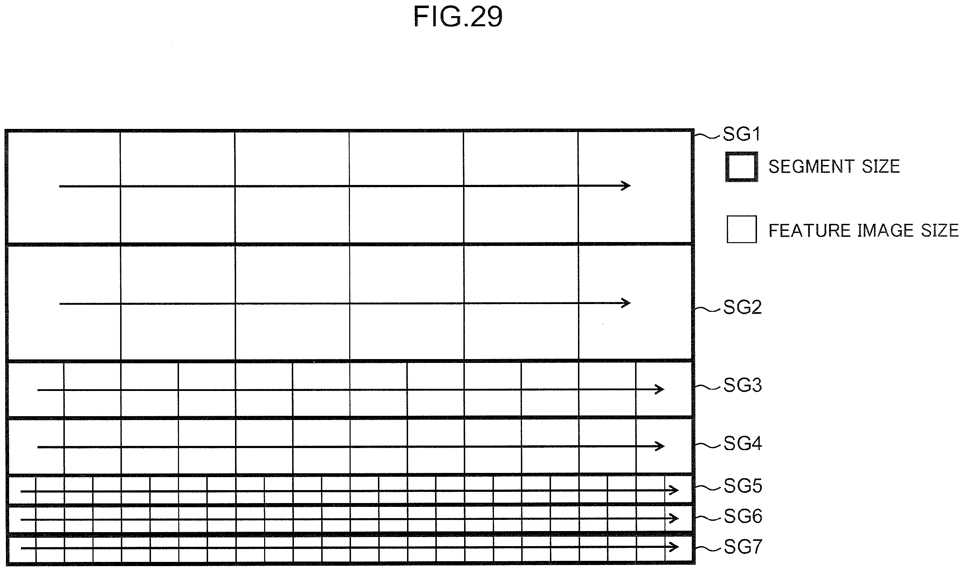

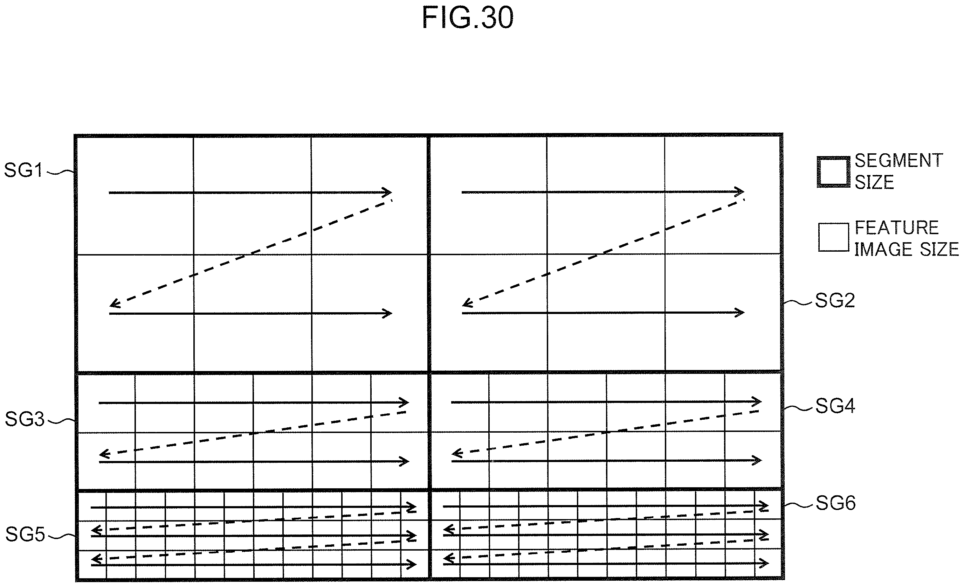

FIGS. 28 to 30 are diagrams showing an example of division into a plurality of segments. In the example shown in FIG. 28, the feature map is divided into three segments SG1 to SG3. In the example shown in FIG. 29, the feature map is divided into seven segments SG1 to SG7. In the example shown in FIG. 30, the feature map is divided into six segments SG1 to SG6. The feature image is scanned segment by segment, and the plurality of feature images belonging to the same segment is always encoded consecutively in the bitstream. Note that each segment may be, for example, a unit called a slice, which can be encoded and decoded independently.

Note that in the example shown in FIG. 22, the scan order setting unit 3201 and the scanning unit 3202 are configured as separate processing blocks, but may be configured to execute processing together as a single processing block.

The scanning unit 3202 sequentially inputs the plurality of divided feature images into the entropy encoding unit 3203. The entropy encoding unit 3203 generates the bitstream by encoding and arithmetically encoding each feature image with the encoding block size. Arithmetic encoding is, for example, context adaptive binary arithmetic coding (CABAC). The encoding device 2101 transmits the bitstream generated by the entropy encoding unit 3203 to the decoding device 2102.

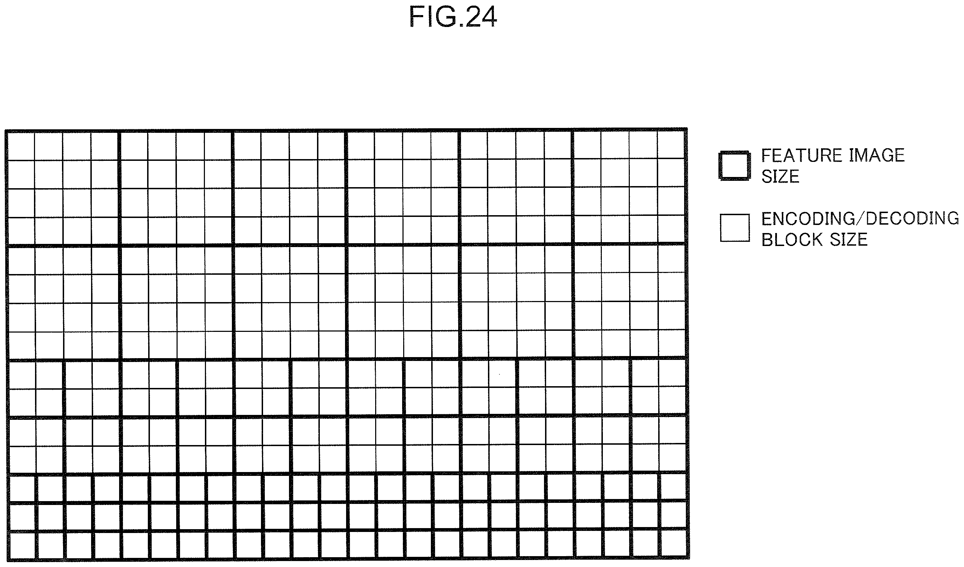

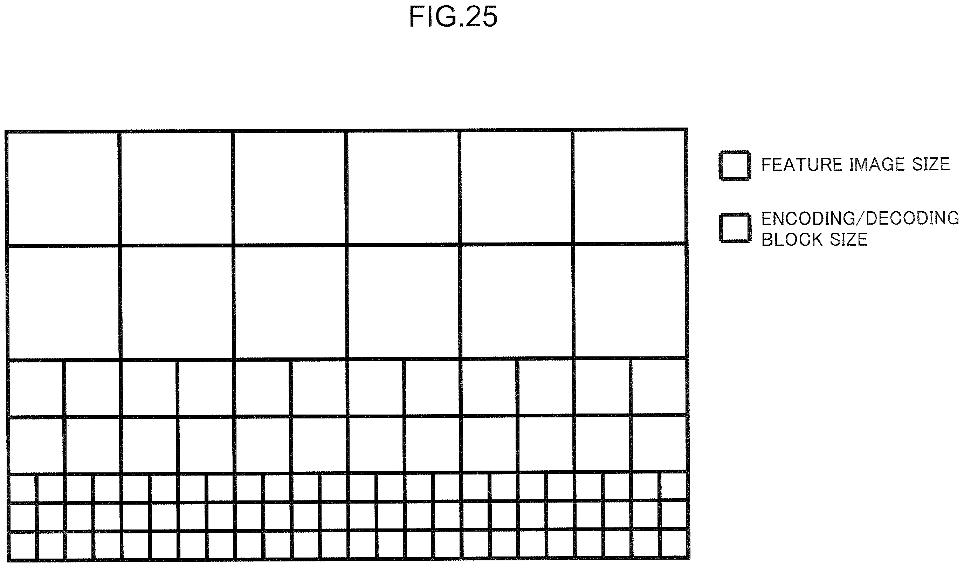

FIGS. 24 and 25 are diagrams showing the relationship between the feature image size and the encoding block size. The feature map is constructed from a plurality of types of feature images of different sizes.

As shown in FIG. 24, the entropy encoding unit 3203 encodes the plurality of feature images with a constant encoding block size corresponding to the smallest feature image size among a plurality of sizes of the plurality of types of feature images (hereinafter referred to as "feature image size"). Alternatively, as shown in FIG. 25, the entropy encoding unit 3203 may encode the plurality of feature images with a plurality of encoding block sizes corresponding to the plurality of feature image sizes.

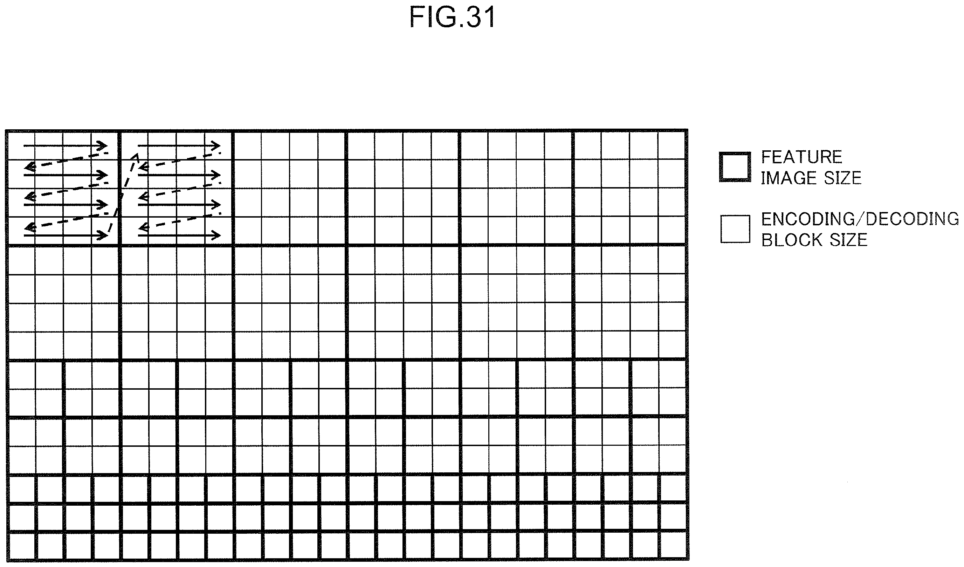

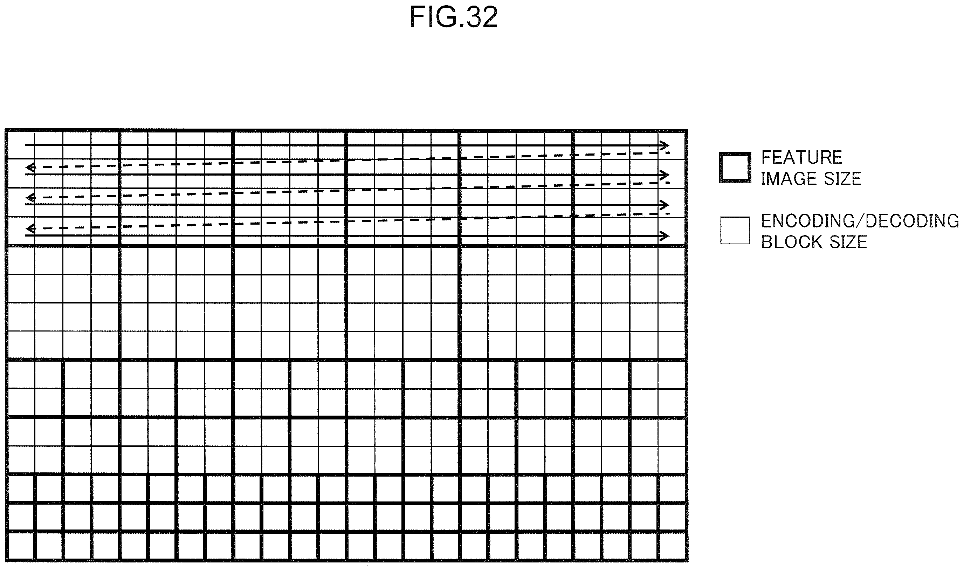

FIGS. 31 and 32 are diagrams showing the scan order when one feature image is divided into a plurality of encoding blocks and encoded. The entropy encoding unit 3203 may execute encoding in raster scan order for each feature image as shown in FIG. 31, and may execute encoding across the plurality of feature images in row-by-row raster scan order of encoding blocks as shown in FIG. 32.

Furthermore, the encoding device 2101 may be configured to reconstruct the divided feature map, input the reconstructed feature map into the task processing unit 3205, and output the estimation result by the task processing unit 3205 executing the neural network task.

In step S4002 of FIG. 19, the plurality of feature images divided into a plurality of segments is input from the scanning unit 3202 to the reconstruction unit 3204. The reconstruction unit 3204 reconstructs each of the plurality of segments by arranging the plurality of input feature images in the prescribed scan order, and reconstructs the feature map by arranging the plurality of segments in the prescribed order. Note that to reconstruct the same feature map as the feature map generated by the decoding device 2102, the reconstruction unit 3204 may be configured to execute the process similar to the process executed by the decoding device 2102 by using the output of the entropy encoding unit 3203 as an input.

For example, the plurality of feature images is arranged according to the hierarchical order of the neural network. That is, the arrangement is made in ascending order (order of size from largest) or descending order (order of size from smallest) of the hierarchy of the neural network.

The scan order setting unit 3201 sets ascending order or descending order of the scan order on the basis of the size of each of the plurality of input feature images. The reconstruction unit 3204 switches between ascending order and descending order according to the scan order set by the scan order setting unit 3201. For example, the reconstruction unit 3204 switches to ascending order when the plurality of feature images is input in order of size from largest, and switches to descending order when the plurality of feature images is input in order of size from smallest. Alternatively, order information for setting ascending order or descending order of the prescribed scan order may be added to the bitstream header or the like, and the reconstruction unit 3204 may switch between ascending order and descending order of the scan order on the basis of the order information. The reconstruction unit 3204 inputs, into the task processing unit 3205, the feature map reconstructed by arranging the plurality of feature images in the prescribed scan order.

In step S4003 of FIG. 19, the task processing unit 3205 executes at least the prescribed task process such as the neural network task involving estimation on the basis of the input feature map. One example of the neural network task is object detection, object segmentation, object tracking, action recognition, pose estimation, pose tracking, machine-human hybrid vision, or an arbitrary combination thereof.

The task processing unit 3205 outputs a signal indicating execution results of the neural network task. The signal may include at least one of the number of detected objects, the trust level of the detected objects, boundary information or location information on the detected objects, and the classification category of the detected objects.

Note that the configuration shown in FIG. 22 includes the reconstruction unit 3204 and the task processing unit 3205, thereby making it possible to output estimation results by executing the neural network task. However, if there is no need to execute the neural network task in the video encoder, a configuration in which the reconstruction unit 3204 and the task processing unit 3205 are omitted may be adopted. Similarly, in the processing procedure 4000 shown in FIG. 19, if there is no need to execute the neural network task, a configuration in which steps S4002 and S4003 are omitted may be adopted.

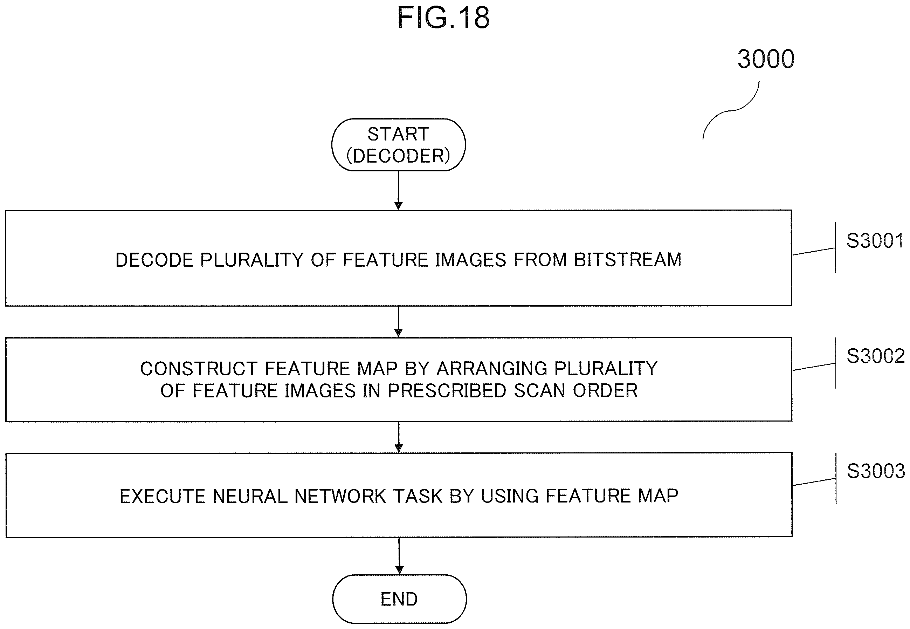

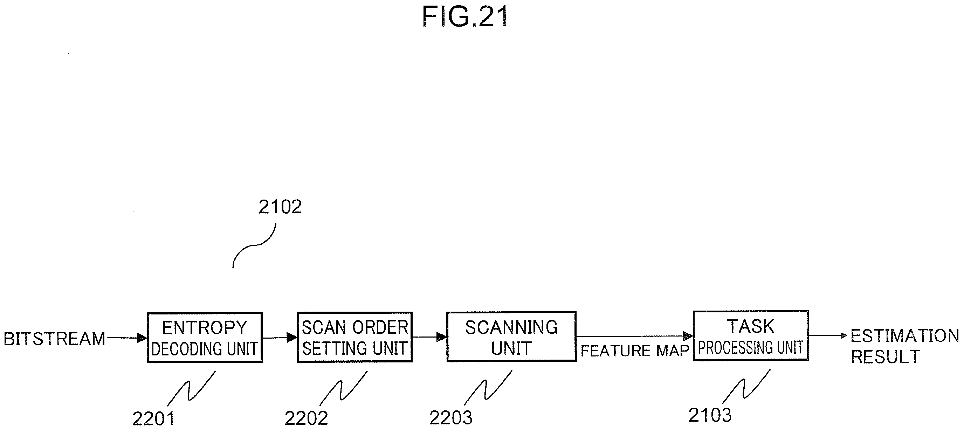

FIG. 21 is a block diagram showing a configuration of the decoding device 2102 according to the second embodiment of the present disclosure. FIG. 18 is a flowchart showing a processing procedure 3000 of the image decoding method according to the second embodiment of the present disclosure.

As shown in FIG. 21, the decoding device 2102 includes an entropy decoding unit 2201, a scan order setting unit 2202, and a scanning unit 2203.

In step S3001 of FIG. 18, the entropy decoding unit 2201 decodes the plurality of feature images on a decoding block basis from the bitstream received from the encoding device 2101.

FIGS. 24 and 25 are diagrams showing the relationship between the feature image size and the decoding block size. The feature map is constructed from a plurality of types of feature images of different sizes.

As shown in FIG. 24, the entropy decoding unit 2201 decodes the plurality of feature images with a constant decoding block size corresponding to the smallest feature image size among a plurality of feature image sizes of the plurality of types of feature images. Alternatively, as shown in FIG. 25, the entropy decoding unit 2201 may decode the plurality of feature images with a plurality of decoding block sizes corresponding to the plurality of feature image sizes.

FIGS. 31 and 32 are diagrams showing the scan order when one feature image is divided into a plurality of encoding blocks and encoded. The entropy decoding unit 2201 may execute decoding in raster scan order for each feature image as shown in FIG. 31, and may execute decoding across the plurality of feature images in row-by-row raster scan order of encoding blocks as shown in FIG. 32.

A plurality of decoding blocks or a plurality of feature images is input into the scan order setting unit 2202 from the entropy decoding unit 2201.

In step S3002 of FIG. 18, the scan order setting unit 2202 sets the scan order for constructing the feature map from the plurality of feature images according to the rule determined in advance between the encoding device 2101 and the decoding device 2102. Note that if the above-described setting information indicating arbitrary scan order is added to the bitstream header, the decoding device 2102 can construct the feature map by arranging the plurality of decoded feature images in the scan order indicated by the setting information.

FIG. 26 is a diagram showing a first example of the scan order. The scan order setting unit 2202 sets the raster scan order as the scan order.

FIG. 27 is a diagram showing a second example of the scan order. The scan order setting unit 2202 sets the Z scan order as the scan order.

The plurality of feature images divided into a plurality of segments is input into the scanning unit 2203. The scanning unit 2203 constructs the feature map by arranging the plurality of feature images in the scan order set by the scan order setting unit 2202.

For example, the plurality of feature images is arranged according to the hierarchical order of the neural network. That is, the arrangement is made in ascending order (order of size from largest) or descending order (order of size from smallest) of the hierarchy of the neural network.

The scan order setting unit 2202 sets ascending order or descending order of the scan order on the basis of the size of each of the plurality of input feature images. The scanning unit 2203 switches between ascending order and descending order according to the scan order set by the scan order setting unit 2202. For example, the scanning unit 2203 switches to ascending order when the plurality of feature images is input in order of size from largest, and switches to descending order when the plurality of feature images is input in order of size from smallest. Alternatively, the order information for setting ascending order or descending order of the prescribed scan order may be decoded from the bitstream header or the like, and the scanning unit 2203 may switch between ascending order and descending order of the scan order on the basis of the order information. The scanning unit 2203 inputs, into the task processing unit 2103, the feature map constructed by arranging the plurality of feature images in the prescribed scan order.

Note that in the example shown in FIG. 21, the scan order setting unit 2202 and the scanning unit 2203 are configured as separate processing blocks, but may be configured to execute processing together as a single processing block.

In step S3003 of FIG. 18, the task processing unit 2103 executes at least the prescribed task process such as the neural network task involving estimation on the basis of the input feature map. One example of the neural network task is object detection, object segmentation, object tracking, action recognition, pose estimation, pose tracking, machine-human hybrid vision, or an arbitrary combination thereof.

The task processing unit 2103 outputs a signal indicating execution results of the neural network task. The signal may include at least one of the number of detected objects, the trust level of the detected objects, boundary information or location information on the detected objects, and the classification category of the detected objects.

According to the present embodiment, the feature map can be appropriately constructed by arranging the plurality of feature images in the prescribed scan order.

### Industrial Applicability

The present disclosure is particularly useful for application to the image processing system including an encoder transmitting images and a decoder receiving images.

## Claims

1. An image decoding method comprising, by an image decoding device:
receiving, from an image encoding device, a bitstream including encoded data of a plurality of feature maps for an image;
decoding the plurality of feature maps using the bitstream;
selecting a first feature map from the plurality of decoded feature maps and outputting the first feature map to a first task processing device that executes a first task process based on the first feature map; and
selecting a second feature map from the plurality of decoded feature maps and outputting the second feature map to a second task processing device that executes a second task process based on the second feature map.

2. The image decoding method according to claim 1, wherein the image decoding device selects the first feature map and the second feature map based on index information of each of the plurality of feature maps.

3. The image decoding method according to claim 1, wherein the image decoding device selects the first feature map and the second feature map based on size information of each of the plurality of feature maps.

4. The image decoding method according to claim 1, wherein the image decoding device decodes the second feature map by inter prediction using the first feature map.

5. The image decoding method according to claim 1, wherein the image decoding device decodes the first feature map and the second feature map by intra prediction.

6. The image decoding method according to claim 1, wherein each of the plurality of feature maps includes a plurality of feature images for the image.

7. The image decoding method according to claim 6, wherein
the image decoding device decodes the plurality of feature images, and
constructs each of the plurality of feature maps by arranging the plurality of decoded feature images in a prescribed scan order.

8. The image decoding method according to claim 7, wherein
each of the plurality of feature maps includes a plurality of segments,
each of the plurality of segments includes the plurality of feature images,
the image decoding device constructs each of the plurality of segments by arranging the plurality of decoded feature images in the prescribed scan order, and
constructs each of the plurality of feature maps by arranging the plurality of segments in prescribed order.

9. The image decoding method according to claim 7, wherein
the image decoding device switches, based on a size of each of the plurality of decoded feature images, between ascending order and descending order for the prescribed scan order.

10. The image decoding method according to claim 7, wherein
the bitstream includes order information which sets one of ascending order or descending order for the prescribed scan order, and
the image decoding device switches, based on the order information, between ascending order and descending order for the prescribed scan order.

11. The image decoding method according to claim 7, wherein
the plurality of feature images includes a plurality of types of feature images of different sizes, and
the image decoding device decodes the plurality of feature images with a constant decoding block size corresponding to a smallest size of the plurality of sizes of the plurality of types of feature images.

12. The image decoding method according to claim 7, wherein
the plurality of feature images includes a plurality of types of feature images of different sizes, and
the image decoding device decodes the plurality of feature images with a plurality of decoding block sizes corresponding to the plurality of sizes of the plurality of types of feature images.

13. The image decoding method according to claim 7, wherein the prescribed scan order is raster scan order.

14. The image decoding method according to claim 7, wherein the prescribed scan order is Z scan order.

15. The image decoding method according to claim 1, wherein
the bitstream includes encoded data on the image, and
the image decoding device:
decodes the image using the bitstream; and
executes the decoding of the plurality of feature maps and the decoding of the image using a common decoding processing unit.

16. The image decoding method according to any one of claims 1 to 15, wherein the first task process and the second task process include at least one of object detection, object segmentation, object tracking, action recognition, pose estimation, pose tracking, and hybrid vision.

17. An image encoding method comprising, by an image encoding device:
encoding a first feature map for an image;
encoding a second feature map for the image;
generating a bitstream including encoded data of the first feature map and the second feature map; and
transmitting the generated bitstream to an image decoding device.

18. An image decoding device configured to:
receive, from an image encoding device, a bitstream including encoded data of a plurality of feature maps for an image;
decode the plurality of feature maps using the bitstream;
select a first feature map from the plurality of decoded feature maps and output the first feature map to a first task processing device that executes a first task process based on the first feature map; and
select a second feature map from the plurality of decoded feature maps and output the second feature map to a second task processing device that executes a second task process based on the second feature map.

19. An image encoding device configured to:
encode a first feature map for an image;
encode a second feature map for the image;
generate a bitstream including encoded data of the first feature map and the second feature map; and
transmit the bitstream to an image decoding device.
